# EUROPÄISCHE PATENTSCHRIFT

(11) **EP 0 593 987 B1**
(45) Veröffentlichungstag und Bekanntmachung des Hinweises auf die Patenterteilung: **17.04.1996**
(21) Anmeldenummer: 93116240.8
(22) Anmeldetag: 07.10.1993
(51) Int. Cl.: B64D 33/02, F02C 7/042, F02K 7/14

(54) **Querschnittsgeregelter Rechteck-Lufteinlauf**
Variable square air intake duct
Entrée d'air rectangulaire à section réglable

(30) Priorität: 22.10.1992 DE 4235631
(43) Veröffentlichungstag der Anmeldung: 27.04.1994
(73) Patentinhaber: Daimler-Benz Aerospace Aktiengesellschaft, D-81663 München (DE)
(72) Erfinder: Weinreich, Hermann-L., Dr., D-85521 Ottobrunn (DE)

(56) Entgegenhaltungen:
- DE-A- 1 227 733
- GB-A- 911 074
- US-A- 3 011 307

## Beschreibung

Die Erfindung bezieht sich auf einen querschnittsgeregelten Rechteck-Lufteinlauf entsprechend dem Oberbegriff des Anspruchs 1.

Ein derartiger Lufteinlauf ist bereits durch die US 3 011 307 bekannt. Dort bildet die Stoßwellenvorderkante zugleich die Flügelvorderkante und die anschließende Stoßwellenrampe den Oberteil des Flügels. Stromabwärts unterhalb eines konkaven Fangstromteils ist an der Stoßwellenrampe eine Klappe oder Verstellrampe angeordnet, die den vorderen oberen Teil des Lufteinlauf-Diffusors bildet. Die Klappe hat einen vorderen Drehpunkt und kann bei geringen Machzahlen mit ihrem hinteren Teil in den Lufteinlauf schwenken, ohne jedoch den Lufteinlauf ganz zu schließen. Zur Variation des Eintrittsquerschnittes muß der untere Teil des Diffusors an einem stromabwärts liegenden Drehpunkt geschwenkt werden. Es sind also zur Erzielung eines großen Lufteinlaufquerschnittes die Verschwenkung sowohl der Klappe oder Verstellrampe als auch des unteren Diffusorteils erforderlich. Aufgrund der erheblichen äußeren Überschallkompression und der starken Neigung der äußeren Stoßwellen-Rampenkontur sowie der Einlauf-Lippenkontur wird ein erheblicher Wellenwiderstand induziert.

Der Erfindung liegt die Aufgabe zugrunde, einen Lufteinlauf der eingangs genannten Art zu schaffen, der mit einfachem Aufbau für den gesamten Machzahlbereich eine widerstandsarme Durchsatzregelung bei geringstmöglichem Außenwiderstand ermöglicht, wobei er auch in einer modularen Parallelanordnung verwendet werden kann.

Diese Aufgabe wird durch die im Anspruch 1 gekennzeichneten Merkmale gelöst. Vorteilhafte Ausgestaltungen der Erfindung sind in den Unteransprüchen gekennzeichnet.

Der wesentliche Vorteil der Erfindung besteht darin, daß der Lufteinlauf nur die Verstellrampe als einziges Verstellglied aufweist. Daraus ergeben sich die nachfolgend aufgeführten weiteren Vorteile:
- widerstandsarmer Verschluß des Eintrittsquerschnittes;
- Schlucken der Eintritts-Kopfwelle und Anfahren mit interner Überschallkompression;
- widerstandsarme Durchsatzanpassung an die Forderungen des Staustrahltriebwerkes;
- ein im Hinblick auf die Antriebsleistung ausreichender Antriebswirkungsgrad;
- maximaler Luftdrucksatz mit einer Einlauflippe innerhalb der Vorkörper-Kopfwelle;
- minimaler Außenwiderstand, da keine Schrägstoß-Umlenkung, keine Rumpf-Grenzschicht-Abweiser und keine Absaugung;
- keine Stoßinterferenz zwischen Rampenschrägstoß und Lippen-Kopfwelle;
- Schrägstoß-Umlenkungen unter 5,8°, um die Ablösung der Seitenwand-Grenzschichten gering zu halten;
- ausreichender Gesamtdruckrückgewinn, bei einem zu erwartenden kinetischen Diffusorwirkungsgrad von bis zu 0,89;
- geringe Strukturbelastung, infolge von mäßigem Druckniveau, leichte Strukturen und geringe Verstellkräfte;
- der Rampenschrägstoß trifft bei niedrigster Überschallflug-Machzahl auf die Innenseite der Verstellrampe auf;
- Möglichkeit einer modularen Parallelanordnung einer beliebigen Anzahl von mit dem Lufteinlauf ausgestatteter Antriebselemente, z.B. für einen Raumtransporter.

Die Erfindung wird nachstehend anhand eines in der Zeichnung dargestellten Ausführungsbeispieles erläutert. Es zeigen:
- Fig. 1: einen Rechteck-Lufteinlauf für ein Staustrahltriebwerk bei mittleren Machzahlen;
- Fig. 2: einen Schnitt II-II durch den Lufteinlauf der Fig. 1;
- Fig. 3: einen Schnitt III-III durch die Vorderkante einer Seitenwand in vergrößerter Darstellung;
- Fig. 4: einen Punkt IV der Fig. 1 in vergrößerter Darstellung;
- Fig. 5: einen Lufteinlauf wie Fig. 1 bei hohen Machzahlen und
- Fig. 6: einen geschlossenen Lufteinlauf wie Fig. 1.

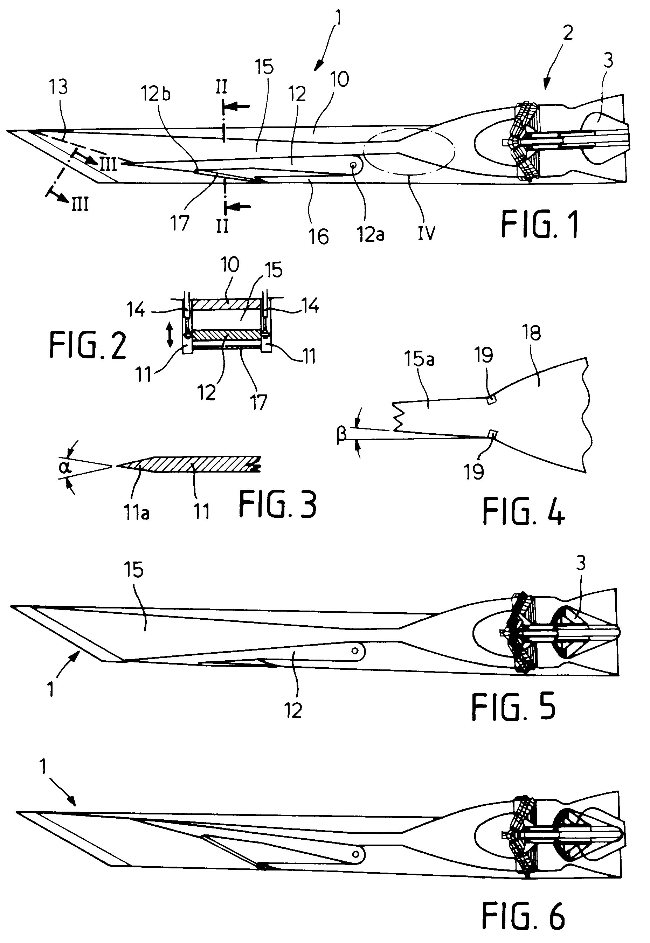

Fig. 1 zeigt einen rechteckigen Lufteinlauf 1 mit angeschlossenem Staustrahltriebwerk 2. Der Lufteinlauf 1 hat eine durchgehende obere feste Stoßwellenrampe 10 und zwei ebenfalls durchgehende gleiche Seitenwände 11, die an der Vorderkante in gepfeilte Schneiden 11a mit einem Schneidenwinkel α von etwa 10° bis 15° auslaufen. Innerhalb des Lufteinlaufs 1 ist eine mit geringerer Länge als die Stoßwellenrampe 10 versehene Verstellrampe 12 eingebaut, die um einen Drehpunkt 12a schwenkbar ist. Die Verstellrampe 12 hat in der Darstellung der Fig. 1, welche der Einstellung bei Mach 3,5 entspricht, einen internen Neigungswinkel von etwa 1,5°. Die Länge der Verstellrampe 12 ist so bemessen, daß ein am vordersten Teil der Stoßwellenrampe 10 auftretender, oberster Rampenschrägstoß 13 etwa 10 cm stromab der vordersten Lippe der Verstellrampe 12 auftrifft. Die Verstellrampe 12 wird, wie in Fig. 2 angedeutet ist, durch zwei hydraulische Getriebe 14, bestehend aus einem Hydraulikzylinder mit Spindel, verschwenkt. Zwischen der Stoßwellenrampe 10 und der Verstellrampe 12 befindet sich ein Diffusorteil 15 mit interner Überschallkompression. Unterhalb der Verstellrampe 12 befindet sich zwischen den Seitenwänden 11 ein Verbindungssteg 16, der den hinteren Teil des Lufteinlaufs 10 nach unten abschließt. An einer am unteren Teil der Verstellrampe 12 befindlichen Nase 12b ist eine Hilfsklappe 17 angelenkt, die bis zum Verbindungssteg 16 reicht und die Lücke zwischen der Verstellrampe 12 und dem Verbindungssteg 16 bei jeder Stellung der Verstellrampe 12 schließt. Wie aus Fig. 4 ersichtlich ist, erweitert sich der letzte Abschnitt 15a des Diffusorteils 15 um einen Winkel β von 3° bis 4° zur Aufnahme des überkritischen Abschlußstoß-Systems. Dem Diffusorteil 15 schließt sich ein Unterschalldiffusor 18 an, am Übergang davon sind zwei Reihen von Wirbelgeneratoren 19 angeordnet, welche die Strömung vom Diffusorteil 15 in den Unterschalldiffusor 18 einlenken. Das Staustrahltriebwerk 2 hat eine Pilzdüse 3, welche bei der in Fig. 2 dargestellten Stellung des Lufteinlaufs 1 für etwa Mach 3,5 geöffnet ist.

Anstelle des Unterschalldiffusors 18 kann auch eine Überschall-Staubrennkammer mit geeigneter Querschnittserweiterung und nachfolgender Schubdüse angeschlossen werden, wodurch eine Schuberzeugung bei Flugmachzahlen oberhalb von 7 ermöglicht wird. Ein solcher Stauantrieb mit Überschallverbrennung ist bekannt unter der Bezeichnung Scramjet und dessen Ausführungsformen Dual-Mode-Ramjet und Ejektor-Ramjet.

Die Fig. 5 zeigt den Lufteinlauf 1 mit voll geöffnetem Diffusorteil 15, wobei die Verstellrampe 12 ganz nach unten geschwenkt ist. Diese Stellung ist für hohe Machzahlen bis etwa 6,8 vorgesehen. Dabei ist auch die Pilzdüse 3 des Staustrahltriebwerkes 2 so weit als möglich geschlossen. Fig. 6 stellt für die Boostphase und den Rückflug den voll geschlossenen Lufteinlauf 1 dar.

## Patentansprüche

1. Querschnittsgeregelter Rechteck-Lufteinlauf für hohe Machzahlen mit einem sich stromabwärts von einer Stoßwellenrampen-Vorderkante sich erstreckenden Fangstromteil, einem sich daran anschließenden Diffusorteil und mit einer schwenkbaren Verstellrampe, die eine Variation des Luftdurchsatzes ermöglicht, **dadurch gekennzeichnet,** daß der Lufteinlauf zwei Seitenwände (11) aufweist, daß der obere Abschluß des Diffusorteils (15) unbeweglich ist und am Fangstromteil anschließt, daß die Verstellrampe (12) eine Drehachse (12a) im hinteren Diffusorteil (15) aufweist, den unteren Abschluß des Diffusorteils (15) bildet und einen kontinuierlichen Verstellbereich vom vollständigen Öffnen des Lufteinlaufs bei hohen Machzahlen bis zum vollständigen Schließen, z.B. bei der Boostphase, aufweist, wobei beim Öffnen des Lufteinlaufs durch Drehung der Verstellrampe (12) die damit verbundene Erweiterung des Fangstromquerschnittes eine zunehmende interne Überschallkompression ermöglicht, und daß durch eine Hilfsklappe (17), die sich unterhalb der Verstellrampe (12) bis zu einem zwischen den Seitenwänden (11) angeordneten Verbindungssteg (16) erstreckt, der Strömungsabschluß unterhalb des Lufteinlaufs widerstandsarm gewährleistet ist.

2. Lufteinlauf nach Anspruch 1, **dadurch gekennzeichnet,** daß am Ende des Diffusorteils (15) Wirbelgeneratoren (19) angeordnet sind, die die Umlenkung zu einem erweiterten Unterschalldiffusor (18) von kurzer Baulänge herstellen.

3. Lufteinlauf nach Anspruch 1, **dadurch gekennzeichnet,** daß der Diffusorteil (15) sich in seinem letzten Abschnitt (15a) schwach erweitert.

4. Lufteinlauf nach Anspruch 1, **dadurch gekennzeichnet,** daß die Seitenwände (11) mit scharfkantigen gepfeilten Schneiden (11a) versehen sind.

5. Lufteinlauf nach Anspruch 1, **dadurch gekennzeichnet,** daß ein am vordersten Teil der festen Stoßwellenrampe (10) auftretender oberster Rampenschrägstoß (13) auf die vordere Innenseite der Verstellrampe (12) auftrifft.

6. Verwendung des Lufteinlaufes nach den Ansprüchen 1 bis 5 für Raumtransporter mit einem Antriebssystem, das aus parallel angeordneten Modulen von Staustrahltriebwerken oder Kombinationstriebwerken mit Unterschallverbrennung aufgebaut ist.

7. Verwendung des Lufteinlaufs nach den Ansprüchen 1 und 3 bis 5 für Flugdemonstratoren und Raumtransportern mit Stauantrieben mit Überschallverbrennung.

## Claims

1. Cross-sectionally controlled rectangular air inlet for high Mach numbers, having an intercept flow portion which extends downstream from the leading edge of a shock ramp, a diffusor portion contiguous therewith, and a swivelling variable-pitch ramp which makes it possible to vary the throughput of air, **characterised in that** the air inlet features two side walls (11), that the upper termination of the diffusor portion (15) is immobile and contiguous with the intercept flow portion, that the variable-pitch ramp (12) incorporates a fulcrum (12a) in the rear diffusor portion (15), constitutes the lower termination of the diffusor portion (15) and features a continuous range of adjustment from the air inlet being fully open at high Mach numbers to being fully closed, e.g. in the boost phase, where by twisting the variable-pitch ramp (12) as the air inlet is opened the associated enlargement of the intercept flow portion allows increasing internal supersonic compression, and that the flow termination beneath the air inlet is guaranteed to be low-drag by means of an auxiliary flap (17) which extends beneath the variable-pitch ramp (12) as far as a linking piece (16) disposed between the side walls (11).

2. Air inlet according to claim 1, **characterised in that** disposed on the end of the diffusor portion (15) are eddy generators (19) which produce the changeover to a broadened subsonic diffusor (18) of short overall length.

3. Air inlet according to claim 1**, characterised in that** the diffusor portion (15) broadens out slightly in its final section (15a).

4. Air inlet according to claim 1, **characterised in that** the side walls (11) have sharp-edged backswept blades (11a).

5. Air inlet according to claim 1, **characterised in that** a topmost undertipped ramp face (13) on the frontmost portion of the fixed shock ramp (10) strikes the front inner face of the variable-pitch ramp (12).

6. Use of the air inlet according to claims 1 to 5 for space tugs having a propulsion system made up of parallel modules of ram jet engines or ducted rockets with subsonic combustion.

7. Use of the air inlet according to claims 1 and 3 to 5 for flight demonstrators and space tugs having ram drives with supersonic combustion.

## Revendications

1. Entrée d'air rectangulaire à réglage de section pour des nombres de Mach élevés, comprenant une partie de flux de captage qui s'étend en aval depuis un bord avant de rampe d'onde de choc et qui est suivie d'une partie de diffuseur, et une rampe réglable pivotante qui permet une variation du débit d'air, **caractérisée** par le fait que l'entrée d'air présente deux parois latérales (11), que la délimitation supérieure de la partie de diffuseur (15) est immobile et se raccorde à la partie de flux de captage, que la rampe réglable (12) présente un axe de pivotement (12) dans la partie de diffuseur arrière (15), constitue la délimitation inférieure de la partie de diffuseur (15) et présentent une plage de réglage continue depuis l'ouverture complète de l'entrée d'air à des nombres de Mach élevés jusqu'à la fermeture complète, par exemple pendant la phase "boost", l'élargissement de la section de flux de captage, qui résulte de l'ouverture de l'entrée d'air par pivotement de la rampe réglable (12), permettant une compression supersonique interne croissante, et qu'un volet auxiliaire (17) qui s'étend en dessous de la rampe réglable (12) jusqu'à une entretoise de liaison (16) disposée entre les parois latérales (11) assure en dessous de l'entrée d'air une surface de délimitation d'écoulement à traînée réduite.

2. Entrée d'air suivant la revendication 1, **caractérisée** par le fait qu'à la fin de la partie de diffuseur (15) sont disposés des générateurs de turbulences (19) qui établissent la déviation vers un diffuseur subsonique (18) divergent, de faible longueur.

3. Entrée d'air suivant la revendication 1, **caractérisée** par le fait que la partie de diffuseur (15) est légèrement divergeante dans son dernier tronçon (15a).

4. Entrée d'air suivant la revendication 1, **caractérisée** par le fait que les parois latérales (11) présentent des tranchants (11a) effilés.

5. Entrée d'air suivant la revendication 1, **caractérisée** par le fait qu'un choc oblique de rampe (13) supérieur apparaissant sur la partie la plus avant de la rampe d'onde de choc (10) fixe tombe sur le côté intérieur avant de la rampe réglable (12).

6. Utilisation de l'entrée d'air suivant les revendications 1 à 5 pour des transporteurs spatiaux avec un système de propulsion composés de modules parallèles, de statoréacteurs ou de propulseurs combinés avec combustion subsonique.

7. Utilisation de l'entrée d'air suivant les revendications 1 et 3 à 5 pour des démonstrateurs de vol et des transporteurs spatiaux avec statopropulseurs à combustion supersonique.
